# EUROPÄISCHE PATENTSCHRIFT

(11) **EP 1 835 982 B1**
(45) Veröffentlichungstag und Bekanntmachung des Hinweises auf die Patenterteilung: **30.09.2009**
(21) Anmeldenummer: 05850359.0
(22) Anmeldetag: 24.12.2005
(51) Int. Cl.: B01D 53/96, F01N 3/08, F02D 41/02

(54) **VERFAHREN ZUR REGENERATION EINES STICKOXID-SPEICHERKATALYSATORS**
METHOD FOR THE REGENERATION OF A NITROGEN OXIDE STORAGE CATALYST
PROCEDE DE REGENERATION D'UN CATALYSEUR A ACCUMULATION D'OXYDES D'AZOTE

(30) Priorität: 24.12.2004 DE 102004062596
(43) Veröffentlichungstag der Anmeldung: 26.09.2007
(73) Patentinhaber: Umicore AG & Co. KG, 63457 Hanau-Wolfgang (DE)
(72) Erfinder: BREMM, Stephan, 63796 Kahl (DE); TOMANIK, Christian Manfred, 35447 Reiskirchen (DE); GOEBEL, Ulrich, 65795 Hattersheim (DE); MUELLER, Wilfried, 61184 Karben (DE); KREUZER, Thomas, 61184 Karben (DE)
(74) Vertreter: Herrmann, Reinhard
(86) Internationale Anmeldenummer: PCT/EP2005/014030
(87) Internationale Veröffentlichungsnummer: WO 2006/069768

(56) Entgegenhaltungen:
- EP-A- 1 386 656
- WO-A-01/44630
- DE-A1- 10 116 877
- DE-A1- 10 123 148
- DE-A1- 10 130 053
- DE-A1- 10 202 935
- DE-A1- 19 735 011
- DE-A1- 19 827 195
- DE-A1- 19 922 962
- DE-A1- 19 952 830
- DE-A1-102004 009 999

## Beschreibung

Die vorliegende Erfindung betrifft die Regeneration von Stickoxid-Speicherkatalysatoren, welche zur Entfernung von Stickoxiden aus dem Abgas von Magermotoren eingesetzt werden.

Auf dem Gebiet der Benzinmotoren sind zur Verminderung des Kraftstoffverbrauchs sogenannte Magermotoren entwickelt worden, die im Teillastbetrieb mit mageren Luft/Kraftstoffgemischen betrieben werden. Ein mageres Luft/Kraftstoffgemisch enthält eine höhere Sauerstoffkonzentration als für die vollständige Verbrennung des Kraftstoffes benötigt wird. Im entsprechenden Abgas liegen dann die oxidierenden Komponenten Sauerstoff (O₂), Stickoxide (NOx) im Überschuß gegenüber den reduzierenden Abgaskomponenten Kohlenmonoxid (CO), Wasserstoff (H₂) und Kohlenwasserstoffen (HC) vor. Mageres Abgas enthält gewöhnlich 3 bis 15 Vol.-% Sauerstoff. Bei Vollast werden Magermotoren jedoch auch mit stöchiometrischen oder unterstöchiometrischen, das heißt fetten Luft/Kraftstoff-Gemischen, betrieben.

Dieselmotoren arbeiten dagegen in der Regel unter Betriebsbedingungen mit weit überstöchiometrischen Luft/Kraftstoff-Gemischen. Erst in den letzten Jahren sind Dieselmotoren entwickelt worden, die für kurze Dauer auch mit fetten Luft/Kraftstoff-Gemischen betrieben werden können. Auch Dieselmotoren, insbesondere solche mit der Möglichkeit fetter Betriebsphasen, werden im Rahmen der vorliegenden Erfindung als Magermotoren bezeichnet.

Zur Kennzeichnung des Luft/Kraftstoff-Gemisches wird die sogenannte Luftzahl Lambda (λ) verwendet. Dabei handelt es sich um das auf stöchiometrische Bedingungen normierte Luft/Kraftstoff-Verhältnis. Ein stöchiometrisch zusammengesetztes Luft/Kraftstoff-Gemisch hat eine Luftzahl von 1. Luftzahlen größer 1 kennzeichnen ein mageres Luft/Kraftstoff-Gemisch, Luftzahlen unter 1 ein fettes Luft/KraftstoffGemisch. Das den Motor verlassende Abgas weist dieselbe Luftzahl auf wie das Luft/Kraftstoff-Gemisch mit dem der Motor betrieben wird.

Wegen des hohen Sauerstoffgehaltes im Abgas von Magermotoren können die in ihm enthaltenen Stickoxide nicht wie bei stöchiometrisch betriebenen Ottomotoren mit Hilfe von Dreiweg-Katalysatoren kontinuierlich unter gleichzeitiger Oxidation von Kohlenwasserstoffen und Kohlenmonoxid zu Stickstoff reduziert werden. Zur Entfernung der Stickoxide aus dem Abgas dieser Motoren sind daher sogenannte Stickoxid-Speicherkatalysatoren entwickelt worden, die die im mageren Abgas enthaltenen Stickoxide in Form von Nitraten speichern.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem inerten Wabenkörper aus Keramik oder Metall, einem sogenannten Tragkörper, aufgebracht ist. Das Katalysatormaterial enthält ein Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial in hochdisperser Form abgeschieden ist. Als Speicherkomponenten werden vorwiegend die basischen Oxide der Alkalimetalle, der Erdalkalimetalle und der Seltenerdmetalle, insbesondere aber Bariumoxid, eingesetzt, welche mit Stickstoffdioxid zu den entsprechenden Nitraten reagieren.

Als katalytisch aktive Komponenten werden gewöhnlich die Edelmetalle der Platingruppe verwendet, die in der Regel gemeinsam mit der Speicherkomponente auf dem Trägermaterial abgeschieden werden. Als Trägermaterial wird überwiegend aktives, hochoberflächiges Aluminiumoxid eingesetzt. Die katalytisch aktiven Komponenten können jedoch auch auf einem separaten Trägermaterial aufgebracht werden, welches ebenfalls aus aktivem Aluminiumoxid bestehen kann.

Die Aufgabe der katalytisch aktiven Komponenten ist es, im mageren Abgas Kohlenmonoxid und Kohlenwasserstoffe zu Kohlendioxid und Wasser umzusetzen. Außerdem sollen sie das im Abgas enthaltene Stickstoffmonoxid zu Stickstoffdioxid oxidieren, damit es mit dem basischen Speichermaterial Nitrate bildet (Speicherphase oder auch Magerbetrieb). Die im Abgas von Magermotoren enthaltenen Stickoxide bestehen nämlich je nach Betriebsbedingungen des Motors zu 65 bis 95 Vol.- % aus Stickstoffmonoxid, welches nicht mit den Speicherkomponenten zu Nitraten reagiert.

Mit zunehmender Einlagerung der Stickoxide ins Speichermaterial nimmt die Speicherfähigkeit des Materials ab. Das Speichermaterial muß daher von Zeit zu Zeit regeneriert werden. Hierzu wird der Motor für kurze Zeit mit stöchiometrisch zusammengesetzten oder fetten Luft/Kraftstoff-Gemischen betrieben (sogenannte Regenerationsphase oder Fettbetrieb). Unter den reduzierenden Bedingungen im fetten Abgas werden die gespeicherten Nitrate zu Stickoxiden NOx zersetzt und zu Stickstoff unter Bildung von Wasser und Kohlendioxid reduziert. Das im Abgas enthaltene Kohlenmonoxid, Wasserstoff und Kohlenwasserstoffe dienen dabei als Reduktionsmittel. Die Reduktion ist exotherm und erhöht die Bett-Temperatur des Katalysators um etwa 30 bis 50 °C gegenüber der Abgastemperatur vor Eintritt in den Katalysator.

Während der Speicherphase oder auch Magerbetrieb liegt die Luftzahl je nach Motortyp zwischen etwa 1,3 und 5. Während der kurzen Regenerationsphase oder auch Fettbetrieb wird die Luftzahl auf Werte zwischen 0,7 und 0,95 abgesenkt.

Beim Betrieb des Stickoxid-Speicherkatalysators wechseln sich Speicherphase und Regenerationsphase regelmäßig ab. Die Abfolge von Speicherphase und Regenerationsphase wird im folgenden auch als Reinigungszyklus bezeichnet. Die Dauer der Speicherphase ist abhängig von der Höhe der Stickoxidemission des Motors und von der Speicherkapazität des Katalysators. Die Speicherphase kann bei Katalysatoren mit hoher Speicherkapazität 300 Sekunden und mehr betragen. Gewöhnlich liegt sie jedoch zwischen 60 und 120 Sekunden. Die Dauer der Regenerationsphase ist dagegen deutlich kürzer. Sie liegt bei weniger als 20 Sekunden.

Zur Ermittlung des optimalen Umschaltzeitpunktes von der Speicherphase zur Regenerationsphase wird gewöhnlich hinter dem Speicherkatalysator ein Stickoxid-Sensor angeordnet. Steigt die von diesem Sensor gemessene Stickoxid-Konzentration im Abgas über einen vorher festgelegten Schwellwert an, so wird die Regeneration des Katalysators eingeleitet.

Moderne Stickoxid-Speicherkatalysatoren haben einen Arbeitsbereich bezogen auf die Abgastemperatur vor dem Katalysator zwischen etwa 150 und 500 °C. Dieser Bereich wird im folgenden auch als Aktivitätsfenster bezeichnet. Unterhalb des Aktivitätsfensters kann der Speicherkatalysator die im Abgas enthaltenen Stickoxide nicht in Form von Nitraten speichern, weil seine katalytisch aktiven Komponenten noch nicht in der Lage sind, die Stickoxide zu Stickstoffdioxid zu oxidieren. Oberhalb des Aktivitätsfensters werden die gespeicherten Nitrate thermisch zersetzt und als Stickoxide ins Abgas abgegeben. Allerdings setzt diese "thermische Desorption" nicht schlagartig oberhalb des Aktivitätsfensters ein, sondern tritt schon innerhalb des Aktivitätsfensters in Konkurrenz zum Speicherprozeß.

Der mit einem Stickoxid-Speicherkatalysator erzielbare Stickoxidumsatz steigt also mit zunehmender Bett-Temperatur des Katalysators kontinuierlich an, durchläuft ein Maximum bei mittleren Temperaturen im Aktivitätsfenster und fällt dann bei hohen Bett-Temperaturen wieder ab. Die Lage des Aktivitätsfensters und insbesondere die Bett-Temperatur für maximalen Stickoxidumsatz ist abhängig von der Formulierung des Katalysators, insbesondere von der Natur der verwendeten Speicherkomponenten. Werden Erdalkalimetalloxide wie Barium- und Strontiumoxid als Speicherkomponenten verwendet, so liegt die Bett-Temperatur für maximalen Stickoxidumsatz etwa zwischen 350 und 400 °C.

Bei der Regeneration eines Speicherkatalysators besteht die Gefahr, daß die Bett-Temperatur des Katalysators während und nach der Regeneration infolge der bei der Umsetzung der Stickoxide mit den reduktiven Bestandteilen des Abgases freigesetzten Wärme in einen Bereich gelangt, in welchem die einsetzende thermische Desorption die Speicherkapazität des Katalysators deutlich vermindert. Es wurde von den Erfindern beobachtet, daß es durch die höheren Temperaturen zu einer beschleunigten Freisetzung von nicht umgesetzten Stickoxiden kommen kann. Weiterhin wurde von den Erfindern beobachtet, daß bei bestimmten Betriebsparametern des Motors die Erwärmung des Stickoxid-Speicherkatalysators durch die Regeneration noch bis in die folgende Magerphase hineinreicht. Als Folge hiervon kommt es zu einem kurzzeitigen Schlupf von Stickoxiden durch den Katalysator, der so stark sein kann, daß die Motorsteuerung sofort wieder eine Regeneration einleitet.

Aufgabe der vorliegenden Erfindung ist es, ein Regenerationsverfahren anzugeben, welches die übermäßige Erwärmung des Speicherkatalysators während der Regeneration bei Abgastemperaturen im Bereich zwischen 150 und 500 °C vermeidet.

Diese Aufgabe wird durch das Verfahren gemäß den Ansprüchen 1 bis 6 gelöst. Das Verfahren geht von einem Magermotor aus, der mit einem Abgasreinigungssystem ausgerüstet ist, welches einen Stickoxid-Speicherkatalysator enthält, dessen Aktivitätsfenster für die Stickoxidspeicherung zwischen 150 und 500 °C liegt. Der Speicherkatalysator wird regelmäßig durch kurzzeitiges Umschalten des Magerbetriebs des Motors in den Fettbetrieb regeneriert.

Das Verfahren ist dadurch gekennzeichnet, daß zur Regeneration des Stickoxid-Speicherkatalysators der Fettbetrieb aus zwei im zeitlichen Abstand aufeinanderfolgenden Fettpulsen gebildet wird, wobei der erste Fettpuls stets kürzer ist als der zweite Fettpuls und der zeitliche Abstand zwischen beiden Pulsen 2 bis 20 Sekunden beträgt.

Zweck dieser Aufteilung des Fettpulses in zwei unterschiedlich lange Fettpulse mit einer bis zu 20 Sekunden währenden Magerphase zwischen beiden Pulsen ist die Abschwächung des Anstiegs der Bett-Temperatur des Katalysators infolge der exothermen Umsetzung der desorbierten Stickoxide mit den reduktiven Bestandteilen des fetten Abgases. Um dies zu erreichen, muß der erste Fettpuls deutlich kürzer sein als der zweite Fettpuls. Die kurzzeitige Magerphase zwischen beiden Pulsen sorgt dafür, daß die Exotherme während des ersten Fettpulses zumindest teilweise wieder an das Abgas abgegeben werden kann. Dies ist möglich, da infolge der exothermen Umsetzungen am Katalysator seine Bett-Temperatur größer ist als die Abgastemperatur.

Die Verwendung von Fettpulsen zur Regeneration von Speicherkatalysatoren wird schon in verschiedenen Patentschriften beschrieben. So offenbart die EP 1 386 656 A1 die Regeneration eines Speicherkatalysators mit 2 bis 10 aufeinanderfolgenden Fettpulsen, wenn die Abgastemperatur zwischen 170 und 250 °C liegt. Durch die aufeinanderfolgenden Fettpulse mit dazwischenliegenden Magerphasen soll der Katalysator aufgeheizt werden, um seine Bett-Temperatur in einen für die Regeneration günstigen Bereich anzuheben.

Die DE 100 26 762 A1 beschreibt ein Verfahren zur Desulfatisierung eines Stickoxid-Speicherkatalysators mittels abwechselnd fettem und magerem Abgas. Die Desulfatisierung eines Stickoxid-Speicherkatalysators ist erst oberhalb einer Bett-Temperatur von 600 °C möglich. Diese Temperatur liegt weit oberhalb der für das vorgeschlagene Verfahren relevanten Temperaturen.

Die Patentanmeldung DE 198 01 815 A1 beschreibt ein Verfahren zur Regeneration eines Stickoxid-Speicherkatalysators mit einem zwischen fett und mager oszillierendem Abgas, wobei die Abgaszusammensetzung im Mittel stöchiometrisch oder leicht mager zusammengesetzt ist. Auf die im Katalysator während der Regeneration vorherrschenden Temperaturen geht diese Patentanmeldung nicht ein.

Zum besseren Verständnis wird die vorliegende Erfindung an Hand der Figuren 1 bis 4 näher erläutert. Es zeigen:
- **Figur 1:**: Stickoxid-Speicherwirkungsgrad eines Stickoxid-Speicherkatalysators in Abhängigkeit von der Abgastemperatur vor Katalysator
- **Figur 2:**: Verlauf der Luftzahl vor Katalysator und der Temperatur nach Katalysator während einer Regeneration gemäß dem Stand der Technik
- **Figur 3:**: Verlauf der Luftzahl vor Katalysator und der Temperatur nach Katalysator während einer Regeneration gemäß Erfindung mit zwei zeitlich beabstande- ten Fettpulsen
- **Figur 4:**: NOx-Umsatz und HC-Umsatz an einem Fahrzeug mit Stickoxid- Speicherkatalysator

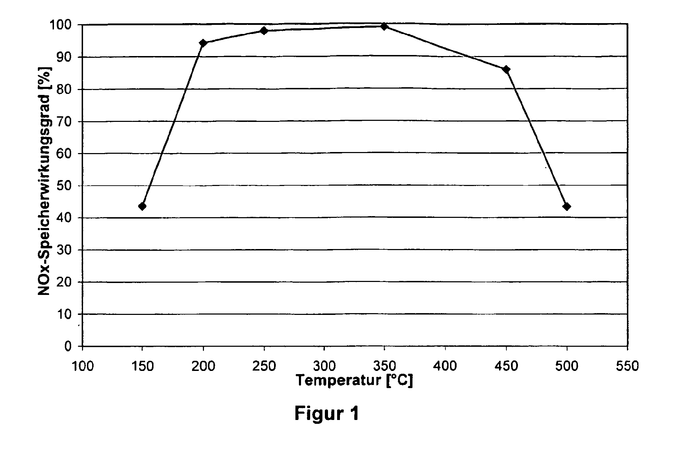

Figur 1 zeigt den typischen Verlauf des Speicherwirkungsgrades eines Stickoxid-Speicherkatalysators in Abhängigkeit von der Abgastemperatur vor dem Katalysator im stationären Betrieb. Das Aktivitätsfenster des Katalysators für die Speicherung der Stickoxide liegt etwa zwischen einer Abgastemperatur vor Katalysator von 150 und 500 °C. Dieser Bereich kann je nach Formulierung und Alterungszustand des Katalysators schmaler oder breiter sein oder auch in seiner Lage verschoben sein. Typischerweise liegt die optimale Arbeitstemperatur des Katalysators zwischen 300 und 350 °C. An der Hochtemperaturflanke der Speicherkurve nimmt der Speicherwirkungsgrad ab, da die in Form von Nitraten gespeicherten Stickoxide bei diesen Temperaturen zunehmend thermisch zersetzt werden.

Die einsetzende thermische Desorption infolge der Temperaturerhöhung durch die Exothermie bei der Regeneration soll durch die erfindungsgemäße Regeneration mit zwei aufeinanderfolgenden Fettpulsen abgeschwächt werden. Allerdings ist die Temperaturerhöhung durch die Exothermie nur dann ein Problem, wenn die Abgastemperatur vor Speicherkatalysator inklusive der zu erwartenden Temperaturerhöhung im Katalysator infolge der Regeneration größer ist als die Temperatur für die maximale Speicherkapazität im mittleren Temperaturbereich des Aktivitätsfensters. Für alle Abgastemperaturen unterhalb dieser Temperatur kann die Aufspaltung der Fettpulse entfallen, das heißt die Fettphase wird nur dann in zwei Pulse aufgespalten, wenn die Abgastemperatur vor Speicherkatalysator inklusive der zu erwartenden Temperaturerhöhung im Katalysator infolge der Regeneration größer ist als die Temperatur für die maximale Speicherkapazität.

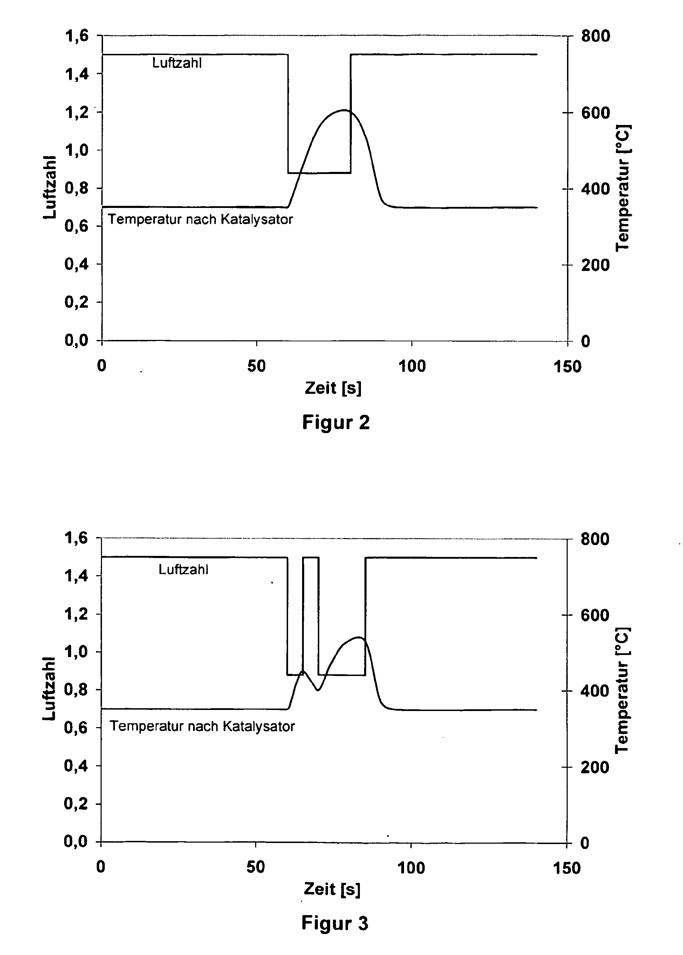

Figur 2 zeigt den Verlauf der Luftzahl und der Bett-Temperatur des Katalysators vor, während und nach einer Regeneration eines Speicherkatalysators. Während des Magerbetriebs beträgt die Luftzahl 1,5. Die Abgastemperatur vor Katalysator liegt bei 350 °C. Zur Einleitung der Regeneration wird die Luftzahl des Abgases durch Anfetten auf einen Wert von 0,88 abgesenkt und für etwa 20 Sekunden auf diesem Wert gehalten. Während des Fettbetriebs werden die gespeicherten Nitrate wieder zu Stickoxiden zersetzt und mit den im Abgas enthaltenen Kohlenwasserstoffen und Kohlenmonoxid zu Stickstoff, Kohlendioxid und Wasser umgesetzt. Diese Umsetzung ist exotherm und führt zu einer starken Erhöhung der Bett-Temperatur des Katalysators. Die Temperaturerhöhung kann weit über den Arbeitsbereich des Stickoxid-Speicherkatalysators hinausgehen, so daß er kurz nach der Regeneration auf Grund seiner hohen Temperatur keine Stickoxide mehr speichern kann. Es kommt zu einem unerwünschten Schlupf von Stickoxiden, der die Notwendigkeit einer weiteren Regeneration vortäuschen kann.

Figur 3 zeigt dagegen den Verlauf von Luftzahl und Bett-Temperatur des Katalysators nach dem vorgeschlagenen Verfahren. Beispielhaft ist in Figur 3 die Regenerationszeit von 20 Sekunden in zwei Fettpulse von 5 und 15 Sekunden aufgespaltet. Der Abstand beider Fettpulse in Figur 3 beträgt 5 Sekunden. Während dieser kurzen Zeit wird der Motor wieder mit magerem Abgas betrieben. Wie der ebenfalls dargestellte Temperaturverlauf nach Katalysator zeigt, steigt während des ersten Fettpulses die Temperatur durch die exotherme Regeneration genau wie in Figur 2 stark an. Der kurze Magerbetrieb zwischen den beiden Fettpulsen reicht jedoch aus, um die Temperatur des Katalysators nach dem ersten Fettpuls so weit abzusenken, daß der Temperaturanstieg während der restlichen Regeneration nicht aus dem Arbeitsbereich des Katalysators hinausführt. Der Katalysator ist also sofort nach Beendigung der Regeneration wieder zur Speicherung der Stickoxide bereit.

Erfindungsgemäß wird die Dauer des ersten Fettpulses stets kürzer gewählt als die Dauer des zweiten Fettpulses. Bevorzugt liegt das Verhältnis der zeitlichen Dauer des ersten Fettpulses zur Dauer des zweiten Fettpulses im Bereichen zwischen 0,01 bis 0,9, bevorzugt zwischen 0,01 und 0,5 und insbesondere zwischen 0,1 und 0,5, wobei die Gesamtdauer aus beiden Fettpulsen zwischen 5 und 30 Sekunden beträgt. Um eine ausreichende Kühlung des Katalysators zwischen den beiden Fettpulsen zu gewährleisten, sollte der zeitliche Abstand der beiden Fettpulse zwischen 2 und 20 Sekunden betragen.

Das Verfahren kann sowohl bei Abgasreinigungsanlagen von Kraftfahrzeugen eingesetzt werden, die nur einen Stickoxid-Speicherkatalysator im Unterbodenbereich des Fahrzeugs aufweisen, als auch bei Abgasreinigungsanlagen, die einen Stickoxid-Speicherkatalysator als Startkatalysator und einen weiteren Stickoxid-Speicherkatalysator im Unterbodenbereich des Fahrzeugs besitzen. In diesem Fall wird das Verhältnis der zeitlichen Dauer des ersten Fettpulses zur Dauer des zweiten Fettpulses dem Verhältnis der Speicherkapazitäten beider Katalysatoren angepaßt, wobei die Gesamtdauer aus beiden Fettpulsen zwischen 5 und 30 Sekunden liegt und der zeitliche Abstand beider Fettpulse zwischen 5 und 30 Sekunden beträgt.

### Beispiel:

Im folgenden Beispiel wurden HC- und NOx-Umsatz an einem mageren Otto-Motor mit Benzin-Direkteinspritzung gemessen. Die Untersuchungen fanden an einem Motorprüfstand statt. Die Abgasreinigungsanlage bestand aus einem motornahen Startkatalysator und einem Stickoxid-Speicherkatalysator. Die Abgasleitung zwischen Startkatalysator und Speicherkatalysator hatte eine Länge von 1 m. Der Speicherkatalysator besaß die in Figur 1 gezeigte Abhängigkeit des NOx-Speicherwirkungsgrades in Abhängigkeit von der Abgastemperatur vor Eintritt in den Katalysator.

Vor Beginn der Messungen wurden Motor und Abgasreinigungsanlage während etwa einer Stunde konditioniert. Die Konditionierung umfaßte mehrere Reinigungszyklen, die jeweils eine Gesamtdauer von 330 Sekunden aufwiesen. Jeder Reinigungszyklus bestand aus einer Magerphase (Speicherphase) von 300 und einer Fettphase (Regenerationsphase) von 30 Sekunden Dauer. Die Fettphase wurde jeweils nur aus einem zusammenhängenden Fettpuls gebildet. Die Luftzahl λ des Abgases wurde vor Eintritt in den Startkatalysator mit einer Breitband-Lambdasonde gemessen. Die Luftzahl betrug während der Magerphasen etwa 2,2 und während der Fettphasen 0,87. Die Abgastemperatur vor dem Speicherkatalysator lag vor Beginn der jeweiligen Fettphasen etwa zwischen 305 und 310 °C.

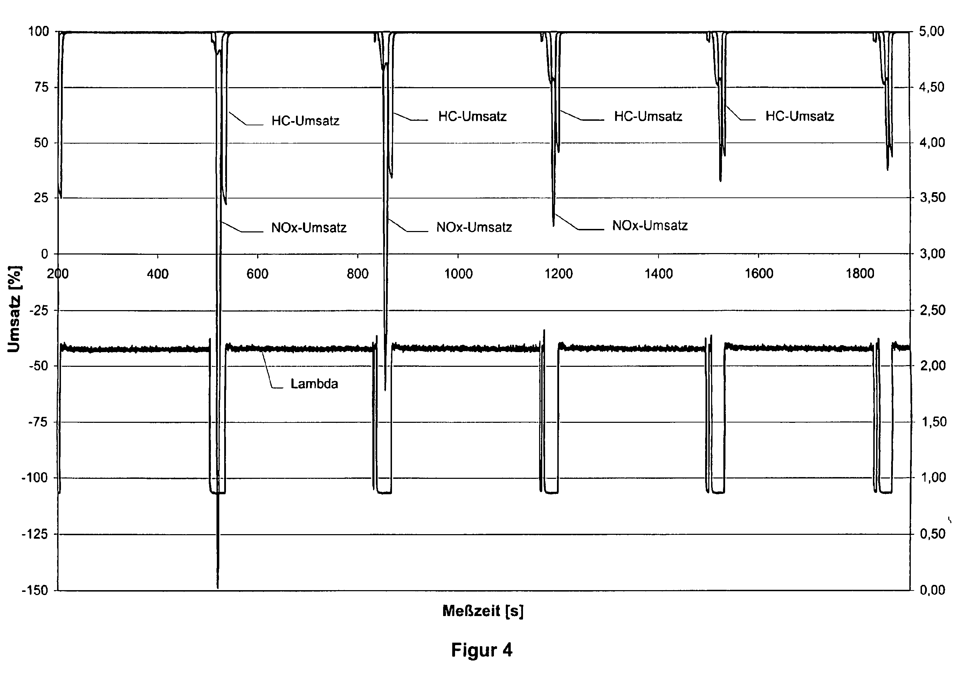

Nach Abschluß der Konditionierung des Systems aus Motor und Abgasreinigungsanlage wurden NOx-Umsatz, HC-Umsatz und Luftzahl jede Zehntel Sekunde gemessen. Figur 4 zeigt einen Ausschnitt der Messungen zwischen 200 und 1900 Sekunden. Dieser Ausschnitt umfaßt 5 Reinigungszyklen. Der erste vollständige Reinigungszyklus in Figur 4 startet mit einer Magerphase mit anschließender konventioneller Fettphase ohne Aufspaltung des Fettpulses. In den folgenden vier Reinigungszyklen wurde der Fettpuls der Fettphase gemäß der Erfindung in jeweils einen kurzen und einen langen Fettpuls aufgespaltet, ohne dabei die Gesamtdauer der Fettphase zu verändern. Die Summe der Zeitdauer beider Fettpulse betrug also bei allen Fettphasen stets 30 Sekunden. Der zeitliche Abstand zwischen beiden Fettpulsen betrug jeweils 5 Sekunden. Die Dauer des ersten Fettpulses wurde zwischen 1 und 5 Sekunden variiert. Zum besseren Verständnis ist der zeitliche Verlauf der fünf in Figur 4 dargestellten Reinigungszyklen im folgenden übersichtlich zusammengestellt:
1. Reinigungszyklus (Regeneration mit einem zusammenhängenden Fettpuls):

| | |
|---|---|
| Magerlaufzeit vor Regenerationsbeginn: | 300 s |
| Dauer des Fettpulses: | 30 s |

2. Reinigungszyklus (erfindungsgemäße Regeneration mit zwei Fettpulsen):

| | |
|---|---|
| Magerlaufzeit vor Regenerationsbeginn | 295 s |
| Dauer des ersten Fettpulses | 1 s |
| Dauer der Magerphase zwischen den Pulsen | 5 s |
| Dauer des zweiten Fettpulses | 29 s |

3. Reinigungszyklus (erfindungsgemäße Regeneration mit zwei Fettpulsen):

| | |
|---|---|
| Magerlaufzeit vor Regenerationsbeginn | 295 s |
| Dauer des ersten Fettpulses | 3 s |
| Dauer der Magerphase zwischen den Pulsen | 5 s |
| Dauer des zweiten Fettpulses | 27 s |

4. Reinigungszyklus (erfindungsgemäße Regeneration mit zwei Fettpulsen):

| | |
|---|---|
| Magerlaufzeit vor Regenerationsbeginn | 295 s |
| Dauer des ersten Fettpulses | 5 s |
| Dauer der Magerphase zwischen den Pulsen | 5 s |
| Dauer des zweiten Fettpulses | 25 s |

5. Reinigungszyklus (erfindungsgemäße Regeneration mit zwei Fettpulsen):

| | |
|---|---|
| Magerlaufzeit vor Regenerationsbeginn | 295 s |
| Dauer des ersten Fettpulses | 5 s |
| Dauer der Magerphase zwischen den Pulsen | 5 s |
| Dauer des zweiten Fettpulses | 25 s |

Während des zusammenhängenden Fettpulses des ersten Reinigungszyklus tritt nach etwa der Hälfte der Fettphase eine starke, impulsartige NOx-Emission auf. Der NOx-Umsatz sinkt von nahe 100 % auf -150 %. Nach etwa 10 Sekunden ist diese impulsartige NOx-Emission wieder beendet. Der negative Umsatz während des NOx-Impulses bedeutet, daß aus dem Speicherkatalysator mehr Stickoxide austreten als durch das Abgas in den Speicherkatalysator einströmen. Die Ursache hierfür liegt vermutlich in der zusätzlichen Erwärmung des Speicherkatalysators durch die exothermen Reaktionen während der Regeneration. Hierdurch verschiebt sich die Temperatur des Katalysators in einen Bereich, in dem zusätzlich zu der Desorption der Stickoxide durch das fette Abgas eine thermische Desorption von Stickoxiden einsetzt. Die dadurch freiwerdende große Menge an Stickoxiden kann offensichtlich nicht mehr vom Katalysator mit den reduktiven Bestandteilen des Abgases umgesetzt werden. Nach Beendigung des NOx-Impulses ist ein ebenfalls impulsartiger Rückgang des HC-Umsatzes zu beobachten. Die Ursache hierfür ist die Tatsache, daß der Speicherkatalysator nach dem NOx-Impuls nahezu vollständig regeneriert ist und somit keine Stickoxide mehr zur Umsetzung der reduktiven Bestandteile des Abgases während des Fettpulses mehr zur Verfügung stehen.

Die folgenden vier Reinigungszyklen mit aufgespalteten Fettpulsen gemäß der Erfindung zeigen, daß durch die Aufspaltung die impulsartige NOx-Emission vermindert werden kann. Offensichtlich reicht die Magerphase von 5 Sekunden Dauer zwischen den beiden Fettpulsen aus, um den Temperaturanstieg des Katalysators zu begrenzen. Optimale Ergebnisse wurden in diesem Beispiel in den beiden letzten Reinigungszyklen mit einer Dauer des ersten Fettpulses von 5 Sekunden erreicht. Gleichzeitig mit einer Verminderung der NOx-Emission während des NOx-Impulses verbessert sich auch der Umsatz der reduktiven Komponenten des Abgases - in Figur 4 erkennbar an dem verbesserten HC-Umsatz.

Figur 4 zeigt, daß durch Anwendung des erfindungsgemäßen Verfahrens zur Regeneration eines Speicherkatalysators die gesamte Reinigungswirkung der Abgasreinigungsanlage verbessert werden kann. Durch geeignete Abstimmung der Dauer von erstem und zweiten Fettpuls sowie der Magerphase zwischen den beiden Fettpulsen sind weitere Verbesserungen bei der Abgasreinigung möglich.

## Patentansprüche

1. Verfahren zur Regeneration eines Stickoxid-Speicherkatalysators im Abgasreinigungssystem eines Fahrzeugs mit einem Magermotor, wobei der Speicherkatalysator ein Aktivitätsfenster für die Stickoxidspeicherung zwischen 150 und 500 °C besitzt und innerhalb des Aktivitätsfensters durch kurzzeitiges Umschalten des Magerbetriebs in den Fettbetrieb regeneriert wird,
**dadurch gekennzeichnet,**
**daß** zur Regeneration des Stickoxid-Speicherkatalysators der Fettbetrieb aus zwei im zeitlichen Abstand aufeinanderfolgenden Fettpulsen gebildet wird, wobei der erste Fettpuls stets kürzer ist als der zweite Fettpuls und der zeitliche Abstand zwischen beiden Pulsen 2 bis 20 Sekunden beträgt.

2. Verfahren nach Anspruch 1,
**dadurch gekennzeichnet,**
**daß** die Stickoxidspeicherkapazität des Speicherkatalysators bei mittleren Temperaturen innerhalb des Aktivitätsfensters ein Maximum durchläuft und der Fettbetrieb nur dann in zwei Pulse aufgespaltet wird, wenn die Abgastemperatur vor Speicherkatalysator inklusive der zu erwartenden Temperaturerhöhung im Katalysator infolge der Regeneration größer ist als die Temperatur für maximale Speicherkapazität.

3. Verfahren nach Anspruch 1,
**dadurch gekennzeichnet,**
**daß** das Verhältnis der zeitlichen Dauer des ersten Fettpulses zur Dauer des zweiten Fettpulses im Bereichen zwischen 0,01 bis 0,9 liegt, wobei die Gesamtdauer aus beiden Fettpulsen zwischen 5 und 30 Sekunden liegt:

4. Verfahren nach Anspruch 1,
**dadurch gekennzeichnet,**
**daß** das Abgasreinigungssystem einen Stickoxid-Speicherkatalysator im Unterbodenbereich des Fahrzeugs aufweist.

5. Verfahren nach Anspruch 4,
**dadurch gekennzeichnet,**
**daß** das Abgasreinigungssystem einen Stickoxid-Speicherkatalysator als Startkatalysator und einen weiteren Stickoxid-Speicherkatalysator im Unterbodenbereich des Fahrzeugs aufweist, wobei jeder der Katalysatoren eine eigene maximale Speicherkapazität besitzt.

6. Verfahren nach Anspruch 4,
**dadurch gekennzeichnet,**
**daß** das Verhältnis der zeitlichen Dauer des ersten Fettpulses zur Dauer des zweiten Fettpulses dem Verhältnis der Speicherkapazitäten beider Katalysatoren entspricht, wobei die Gesamtdauer aus beiden Fettpulsen zwischen 5 und 30 Sekunden liegt und der zeitliche Abstand beider Fettpulse zwischen 5 und 20 Sekunden beträgt.

## Claims

1. Method for regenerating the nitrogen oxide storage catalysts in the exhaust-gas purification system of a vehicle having a lean-burn engine, by briefly switching the lean-burn mode to rich-burn mode, **characterized in that** to regenerate the nitrogen oxide storage catalysts the rich-burn mode is formed from two rich pulses which follow one another with a time interval between them.

2. Method according to Claim 1, **characterized in that** the ratio of the duration of the first rich pulse to the duration of the second rich pulse is in the range between 0.1 and 1, with the total duration of the two rich pulses being between 5 and 20 seconds.

3. Method according to Claim 2, **characterized in that** the time interval between the two rich pulses is from 2 to 120 seconds.

4. Method according to Claim 1, **characterized in that** the exhaust-gas purification system includes a nitrogen oxide storage catalyst in the underbody region of the vehicle.

5. Method according to Claim 4, **characterized in that** the exhaust-gas purification system includes a nitrogen oxide storage catalyst as starting catalyst and a further nitrogen oxide storage catalyst in the underbody region of the vehicle, with each of the catalysts having its own maximum storage capacity.

6. Method according to Claim 5, **characterized in that** the ratio of the duration of the first rich pulse to the duration of the second rich pulse corresponds to the ratio of the storage capacities of the two catalysts, with the total duration of the two rich pulses being between 5 and 30 seconds and the time interval between the two rich pulses being between 5 and 20 seconds.

## Revendications

1. Procédé de régénération de catalyseurs accumulateurs d'oxydes d'azote dans le système d'épuration des gaz d'échappement d'un véhicule avec un moteur à régime pauvre par commutation brève du régime pauvre au régime riche, **caractérisé en ce que,** pour la régénération des catalyseurs accumulateurs d'oxydes d'azote, on forme le régime riche par deux impulsions riches se succédant avec un intervalle de temps.

2. Procédé selon la revendication 1, **caractérisé en ce que** le rapport de la durée temporelle de la première impulsion riche à la durée de la deuxième impulsion riche se situe dans des plages comprises entre 0,1 et 1, dans lequel la durée totale des deux impulsions riches se situe entre 5 et 20 secondes.

3. Procédé selon la revendication 2, **caractérisé en ce que** l'intervalle de temps entre les deux impulsions riches vaut 2 à 20 secondes.

4. Procédé selon la revendication 1, **caractérisé en ce que** le système d'épuration des gaz d'échappement comprend un catalyseur accumulateur d'oxydes d'azote dans la région du bas de caisse du véhicule.

5. Procédé selon la revendication 4, **caractérisé en ce que** le système d'épuration des gaz d'échappement comprend un catalyseur accumulateur d'oxydes d'azote comme catalyseur de démarrage et un autre catalyseur accumulateur d'oxydes d'azote dans la région du bas de caisse du véhicule, dans lequel chacun des catalyseurs possède une capacité d'accumulation maximale propre.

6. Procédé selon la revendication 5, **caractérisé en ce que** le rapport de la durée temporelle de la première impulsion riche à la durée de la deuxième impulsion riche correspond au rapport des capacités d'accumulation des deux catalyseurs, dans lequel la durée totale des deux impulsions riches est comprise entre 5 et 30 secondes et l'intervalle de temps entre les deux impulsions riches vaut entre 5 et 20 secondes.
